# EUROPEAN PATENT APPLICATION

(11) **EP 1 458 165 A2**
(43) Date of publication of application: **15.09.2004**
(21) Application number: 04005704.4
(22) Date of filing: 10.03.2004
(51) Int. Cl.: H04L 29/06, H04L 12/14, G06F 17/60

(54) **Method and system for peer-to-peer distribution of content by a digital media clearing house platform**

(30) Priority: 10.03.2003 US 385592
(71) Applicant: MICROSOFT CORPORATION, Redmond, Washington 98052 (US)
(72) Inventor: Hanson, Eric A., Seattle, Washington 98109 (US)
(74) Representative: Grünecker, Kinkeldey, Stockmair & Schwanhäusser Anwaltssozietät

(57) **Abstract**

Peer to peer distribution is provided by a digital media clearing house platform (DMCHP 200), where content is transferred from one peer or provider (270) to another peer or recipient (270a,b) in return for a payment. When the recipient pays, a portion of the payment is passed to the owner of the rights in the content, according to an agreement enforced by the digital media clearing house platform. Thus, a peer (270) in a peer-to-peer system who distributes content is compensated for the role played by that peer in the distribution of the content, and content owners maintain control over the licensing and distribution of content. The digital media clearing house platform may be implemented using a content metadata repository (210), an online transaction processing engine (230), and a purchasing side user interface (260) to provide distribution of digital rights managed content.

## Description

### FIELD OF THE INVENTION

This invention relates to peer-to-peer networks, and, specifically, to a digital media clearing house platform for facilitating payments for distribution of digital content.

### BACKGROUND OF THE INVENTION

Until recently, systems for sharing files and information between computers were exceedingly limited; they were largely confined to Local Area Networks (LANs) and the direct exchange of files with known individuals over the Internet. LAN transfers were executed mostly via built-in system or network software, while Internet file exchanges were mostly done over a FTP (File Transfer Protocol) connection or one of several other common protocols. The reach of this peer-to-peer (P2P) sharing was limited to the circle of computer users an individual knew and agreed to share files with.

Today, due to the development of a number of P2P file sharing applications, the reach and scope of peer networks has increased dramatically. The two main models for P2P that have evolved are the centralized model and the decentralized model.

Generally, these P2P networks facilitate the location and exchange of files (typically images, audio, or video) amongst a large group of independent users connected through the Internet. In these systems, files are stored on the computers of the individual users or peers, and exchanged through a direct connection between the downloading and uploading peers, by way of an HTTP-style protocol. All peers in this system are symmetric: they all have the ability to function both as a client and a server. This symmetry distinguishes P2P systems from many conventional distributed system architectures. Though the process of exchanging files is similar in both systems, the distinction between centralized and decentralized models is in file location.

The centralized model of P2P file sharing is based on the use of a central server system which directs traffic between individual registered users. One or more central servers maintain directories of the shared files stored on the respective computers of registered users of the network. These directories are updated every time a user logs on or off the server network.

Each time a user of a centralized P2P file sharing system submits a request for a particular file, the central server creates a list of files matching the search request, by cross-checking the request with the server's database of files belonging to users who are currently connected to the network. The central server then displays that list to the requesting user. The requesting user can then select the desired file from the list and open a direct HTTP link with the individual computer which currently possesses that file. The download of the actual file takes place directly, from one network user to the other. The actual file is never stored on the central server or on any intermediate point on the network.

One of the centralized model's main advantages is its central index which locates files quickly and efficiently. Because the central directory constantly updates the index, files that users find through their searches are immediately available for download.

Another advantage lies in the fact that all individual users, or clients, must be registered to be on the server's network. As a result, search requests reach all logged-on users, which ensures that all searches are as comprehensive as possible.

While a centralized architecture allows the most efficient, comprehensive search possible, the system also has only a single point of entry. As a result, the network could completely collapse if one or several of the servers were to be incapacitated. Furthermore, the server-client model may provide out of date information or broken links, as the central server's database is refreshed only periodically.

Unlike a centralized server network, a decentralized network does not use a central server to keep track of all user files. To share files, a user starts with a networked computer A which connects to another networked computer B, and announces to B that it is alive. B will then announce to all computers B is connected to (C, D, E, and F) that A is alive. Computers C, D, E, and F will then announce to all computers C, D, E, and F are connected to that A is alive. This occurs recursively, although when the request propagates to a computer which is too remote from A, generally, the propagation is ended.

Once A has announced itself to the various members of the peer network, it can then search the contents of the shared directories of the peer network members. The search request is sent to all members of the network just as the information about A did, starting with, B, then to C, D, E, F, etc. If one of the computers in the peer network, say for example, computer D, has a file which that matches the request, it transmits the file information (name, size, etc.) back through all the computers in the pathway towards A, where a list of files matching the search request will then appear on computer A's display. A will then be able to open a direct connection with computer D and will be able to download that file directly from computer D. The decentralized server network enables file sharing without using servers that do not actually directly serve content themselves.
The decentralized server network has a number of distinct advantages over other methods of file sharing. Such a network is more robust than a centralized model because it eliminates reliance on centralized servers that are potential critical points of failure.

Messages, requests, and responses are transmitted in a decentralized manner: each computer can send a message to the computers it directly connects with, who in turn pass the message along, and so on. If one computer, or even several computers, in the network were to stop working, messages could still be communicated.

P2P networks thus allow users to search for, find, and download digital media content located on other user's computers anywhere in the world with low or zero marginal cost to the users. This is a fundamental change over the way content has historically been shared.
For example, audio content has historically been shared via audio cassette. But recording on such cassettes is time-consuming and finding and acquiring such tapes is neither convenient nor easy. Due to these costs, piracy associated with these means of reproduction never reached critical levels.

However, with P2P networks, such costs are greatly reduced, and as a result, unpaid, on-line file sharing represents a significant and material form of piracy for those who own the rights to the digital content being shared. To date, the focus of piracy prevention for rights owners has been on stopping such on-line file sharing. However, this is difficult to do.

### SUMMARY OF THE INVENTION

In order to leverage the benefits of P2P networks, in terms of reduced costs for distribution, but simultaneously to ensure that a rights owner receives the benefit of such increased distribution of content for which the rights owner has rights, a digital media clearing house platform (DMCHP) provides a distribution channel which provides financial incentives for P2P users to stop making their libraries available for free. Digital media of all types, including but not limited to audio, video, images, text (e.g., e-books), game software and other software may be distributed. This platform provides functionality to facilitate payment to content rights owners as well as to the content distributor (peer) from whom the content was downloaded.

The DMCHP results in a reduction of digital content piracy over on-line file sharing services, reduced distribution costs for content owners, reduced costs for content owners in technology to foil such file sharing and in seeking regulatory and legal solutions to digital content piracy.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary embodiments of the invention; however, the invention is not limited to the specific methods and instrumentalities disclosed. In the drawings:

Figure 1 is a block diagram showing an exemplary computing environment in which aspects of the invention may be implemented;

Figure 2 is a functional diagram illustrating an example of a DMCHP network;

Figure 3 is a flowchart showing file sharing in accordance with one embodiment of the present invention.

### DETAILED DESCRIPTION OF ILLUSTRATIVE EMBODIMENTS

### Overview

Peer to peer distribution is provided by a digital media clearing house platform, where content is transferred from one peer (provider) to another (recipient) in return for a payment. When the recipient pays, a portion of the payment is passed to the owner of the rights in the content, according to an agreement enforced by the digital media clearing house platform. Thus, a peer in a P2P system who distributes content is compensated for the role played by that peer in the distribution of the content, and content owners maintain control over the licensing and distribution of content.

The digital media clearing house platform may be implemented using a content metadata repository, an online transaction processing engine, and a purchasing side user interface to provide distribution of digital rights managed content. In one embodiment, a digital media clearing house platform includes a content metadata repository, licensing module, online transaction processing engine, account management user interface, and purchasing side user interface to provide distribution of digital rights managed content.

### Exemplary Computing Device

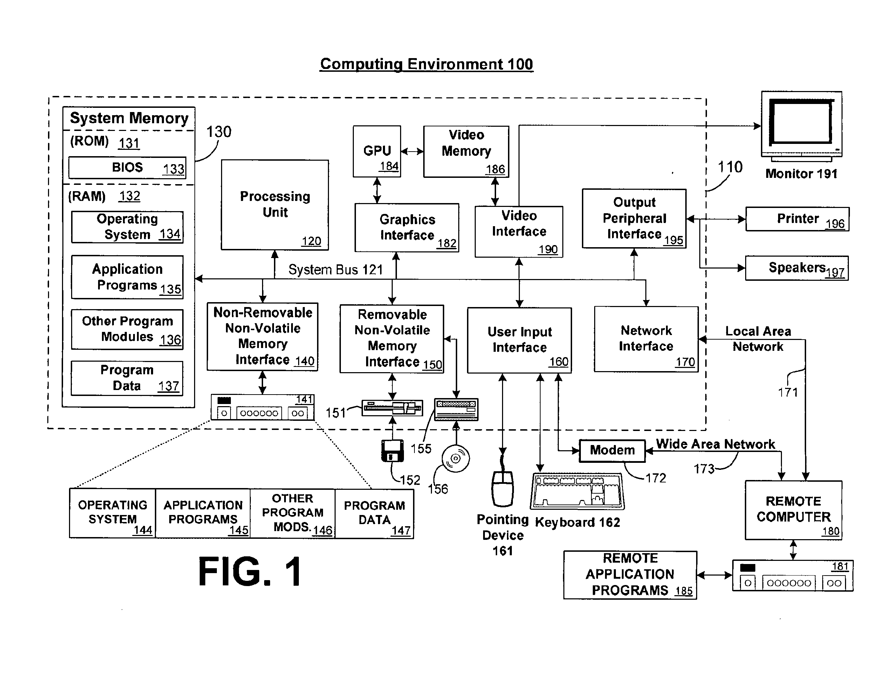

FIG. 1 and the following discussion are intended to provide a brief general description of a suitable computing environment in which the invention may be implemented. It should be understood, however, that handheld, portable and other computing devices and computing objects of all kinds are contemplated for use in connection with the present invention, as described above. Thus, while a general purpose computer is described below, this is but one example, and the present invention may be implemented with other computing devices, such as a thin client having network/bus interoperability and interaction. Thus, the present invention may be implemented in an environment of networked hosted services in which very little or minimal client resources are implicated, e.g., a networked environment in which the client device serves merely as an interface to the network/bus, such as an object placed in an appliance, or other computing devices and objects as well. In essence, anywhere that data may be stored or from which data may be retrieved is a desirable, or suitable, environment for operation according to the invention.

Although not required, the invention can be implemented via an operating system, for use by a developer of services for a device or object, and/or included within application software that operates according to the invention. Software may be described in the general context of computer-executable instructions, such as program modules, being executed by one or more computers, such as client workstations, servers or other devices. Generally, program modules include routines, programs, objects, components, data structures and the like that perform particular tasks or implement particular abstract data types. Typically, the functionality of the program modules may be combined or distributed as desired in various embodiments. Moreover, those skilled in the art will appreciate that the invention may be practiced with other computer configurations. Other well known computing systems, environments, and/or configurations that may be suitable for use with the invention include, but are not limited to, personal computers (PCs), automated teller machines, server computers, hand-held or laptop devices, multi-processor systems, microprocessor-based systems, programmable consumer electronics, network PCs, appliances, lights, environmental control elements, minicomputers, mainframe computers and the like. The invention may also be practiced in distributed computing environments where tasks are performed by remote processing devices that are linked through a communications network/bus or other data transmission medium. In a distributed computing environment, program modules may be located in both local and remote computer storage media including memory storage devices, and client nodes may in turn behave as server nodes.

Fig. 1 thus illustrates an example of a suitable computing system environment 100 in which the invention may be implemented, although as made clear above, the computing system environment 100 is only one example of a suitable computing environment and is not intended to suggest any limitation as to the scope of use or functionality of the invention.
Neither should the computing environment 100 be interpreted as having any dependency or requirement relating to any one or combination of components illustrated in the exemplary operating environment 100.

With reference to Fig. 1, an exemplary system for implementing the invention includes a general purpose computing device in the form of a computer system 110. Components of computer system 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer system 110 typically includes a variety of computer readable media. Computer readable media can be any available media that can be accessed by computer system 110 and includes both volatile and nonvolatile media, removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, Random Access Memory (RAM), Read Only Memory (ROM), Electrically Erasable Programmable Read Only Memory (EEPROM), flash memory or other memory technology, Compact Disk Read Only Memory (CDROM), digital versatile disks (DVD) or other optical disk storage, magnetic cassettes, magnetic tape, magnetic disk storage or other magnetic storage devices, or any other medium which can be used to store the desired information and which can accessed by computer system 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer system 110, such as during start-up, is typically stored in ROM 131. RAM 132 typically contains data and/or program modules that are immediately accessible to and/or presently being operated on by processing unit 120. By way of example, and not limitation, Fig. 1 illustrates operating system 134, application programs 135, other program modules 136, and program data 137.

The computer system 110 may also include other removable/non-removable, volatile/nonvolatile computer storage media. By way of example only, Fig. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Fig. 1 provide storage of computer readable instructions, data structures, program modules and other data for the computer system 110. In Fig. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer system 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A graphics interface 182, such as Northbridge, may also be connected to the system bus 121. Northbridge is a chipset that communicates with the CPU, or host processing unit 120, and assumes responsibility for accelerated graphics port (AGP) communications. One or more graphics processing units (GPUs) 184 may communicate with graphics interface 182. In this regard, GPUs 184 generally include on-chip memory storage, such as register storage and GPUs 184 communicate with a video memory 186. GPUs 184, however, are but one example of a coprocessor and thus a variety of coprocessing devices may be included in computer system 110. A monitor 191 or other type of display device is also connected to the system bus 121 via an interface, such as a video interface 190, which may in turn communicate with video memory 186. In addition to monitor 191, computer systems may also include other peripheral output devices such as speakers 197 and printer 196, which may be connected through an output peripheral interface 195.

The computer system 110 may operate in a networked or distributed environment using logical connections to one or more remote computers, such as a remote computer 180. The remote computer 180 may be a personal computer, a server, a router, a network PC, a peer device or other common network node, and typically includes many or all of the elements described above relative to the computer system 110, although only a memory storage device 181 has been illustrated in Fig. 1. The logical connections depicted in Fig. 1 include a local area network (LAN) 171 and a wide area network (WAN) 173, but may also include other networks/buses. Such networking environments are commonplace in homes, offices, enterprise-wide computer networks, intranets and the Internet.

When used in a LAN networking environment, the computer system 110 is connected to the LAN 171 through a network interface or adapter 170. When used in a WAN networking environment, the computer system 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer system 110, or portions thereof, may be stored in the remote memory storage device. By way of example, and not limitation, Fig. 1 illustrates remote application programs 185 as residing on memory device 181. It will be appreciated that the network connections shown are exemplary and other means of establishing a communications link between the computers may be used.

Various distributed computing frameworks have been and are being developed in light of the convergence of personal computing and the Internet. Individuals and business users alike are provided with a seamlessly interoperable and Web-enabled interface for applications and computing devices, making computing activities increasingly Web browser or network-oriented.

For example, MICROSOFT®'s .NET platform includes servers, building-block services, such as Web-based data storage and downloadable device software. While exemplary embodiments herein are described in connection with software residing on a computing device, one or more portions of the invention may also be implemented via an operating system, application programming interface (API) or a "middle man" object between any of a coprocessor, a display device and requesting object, such that operation according to the invention may be performed by, supported in or accessed via all of .NET's languages and services, and in other distributed computing frameworks as well.

### Digital Media Clearing House Platform

The digital media clearing house platform (DMCHP) provides the platform for enabling the secure electronic distribution of and payment for digital media assets by participating consumers and content rights owners. Through the DMCHP platform, digital content rights owners can leverage the libraries of consumers for paid, digital distribution over the Internet while at the same time providing financial incentive for consumers to offer their libraries to others over the DMCHP rather than over a free file sharing service.

As an exemplary usage scenario, when a user A would like to download a specific song via the DMCHP, user A accesses the DMCHP application and searches for the specific song. User A discovers that the song is available for download from a number of providers, users B, C, and D. User A also discovers that the song is available in more than one format, sampling bitrate, connection speed, and/or price. For example, one user B may be offering the song in WMA format, sampled at 128 Kbps, for a price of $.99 over a DSL connection at 300Kbps. User C may be offering the song in MP3 format, sampled at 40Kbps, for a price of $.79 over a 57.6 Kbps modem. In one embodiment, provider ratings are also available.

In the example, user A selects user B's copy to download, and the transaction is initiated. User A requests the transfer of the file from user B's computer and the file is transferred peer-to-peer. DMCHP records the purchase and charges user A $.99 as agreed for the download. This charge may be made from an established account associated with user A at the DMCHP or as a one time charge as indicated by user A. At the same time, the digital content rights owner's account is credited with the digital content rights owner's set charge, which the digital content rights owner has established for downloads of the song. In one embodiment, a transaction charge for the DMCHP service is also charged. The remainder of the payment from user A is deposited into user B's account. In this way, user B is compensated for providing the file to user A. At the same time, the digital content rights owner has been compensated for the copy made of the digital content.

User A may choose to offer the digital content for resale through the DMCHP and can set the price to download it from user A's computer. However, every time the song is downloaded via the DMCHP, the digital content rights owner is paid the digital content right owner's set charge.

The digital content rights owner may choose to set different prices for different users. For example, the digital content rights owner may provide a discount to high-traffic high-quality providers. Additionally, instead of a per-transaction charge, the DMCHP may have flexible charges based on use, or periodic charges for a given time period of usage. This charge may be assessed to the provider of data or to the recipient of data. For example, a user may be charged a set fee for providing a predeterminied number of files, such as 1000 files, or a user may be charged a fee for monthly use of the DMCHP. Different fees may be charged to be a provider, a recipient, and/or a general user (with rights to provide and receive data).

In one embodiment, a mechanism is provided to verify that the digital content which was provided from the provider to the recipient is the requested digital content. In one embodiment, an activation process is provided. In this way, the recipient may examine at least a portion of the digital content a prespecified number of times before payments are made. For example, the activation process may allow audio content to be played one time. When the recipient indicates that the digital content was the expected digital content, the content may be unlocked for repeat use and the payments processed.

Another verification mechanism is the use of fuzzy logic to perform the comparison. For example, there are utilities which verify the legitimacy of digital content by allowing a comparison between the downloaded content and the legitimate content. Even if two files are sampled at a different bitrate or are in a different audio format, such a comparison may be done. For example, some utilities based on FFT (Fast Fourier Transforms) provide the capability to perform such comparisons.

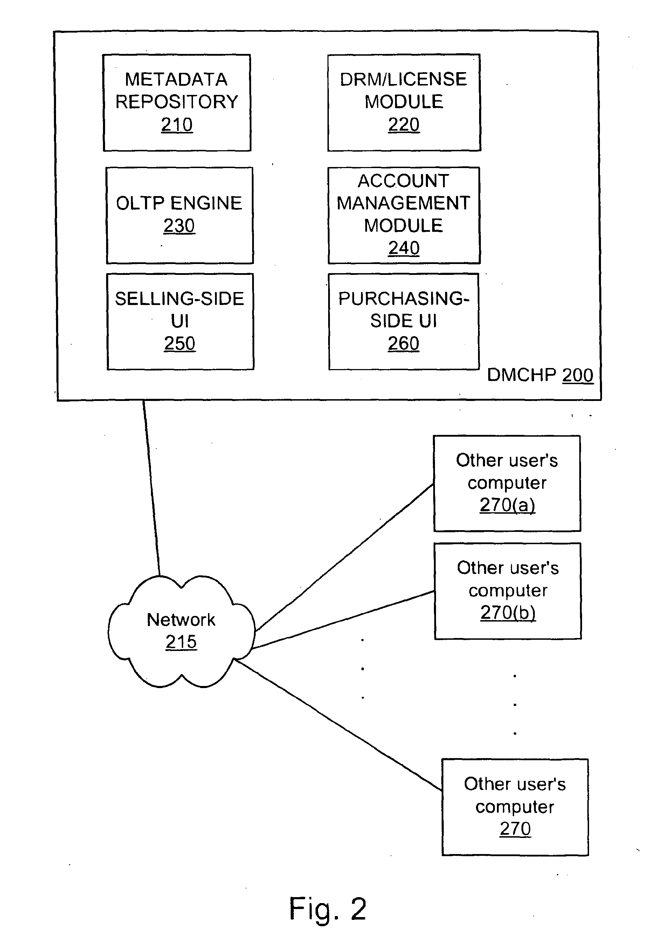

In one embodiment, the digital rights clearing house platform contains a number of modules. As shown in figure 2, DMCHP 200 is comprised of these modules. While shown in figure 2 as a single element, the DMCHP 200 and its constituent parts may be distributed over a number of servers or may be available from one or more redundant servers.

The metadata repository 210 contains metadata associated with all content which can be distributed through the DMCHP network. Attributes which may be contained in the metadata repository 210 include:
- content name, description, and related metadata (e.g., for music: track name, artist, composer, album name);
- content owner (e.g., record label);
- pricing to be paid to content owner;
- owner account information for payment remittance;
- price set by content distributors to be charged; and
- user account metadata, for billing, payment, and fund transfers.

The payment to content owner(s) or other rights owner(s) in the content may also be made to a distributor, publisher, or other third party. Metadata regarding an account for the proper agent to accept payment is optionally included in the content owner information.

If verification data is used for verifying that data downloaded is the correct data, that verification data is also stored in the metadata repository 210. All content distributed through the DMCHP network must be mapped with content in the repository. This mapping may happen in real-time, when a download is requested, or at the time content is registered from the providing user's computer.

The DRM/license module 220 performs digital rights management (DRM) operations for ensuring proper tracking of content. In this way, billing and payment transactions can occur and the appropriate digital content owner can be paid.

As previously discussed, in the embodiment, a limited use by a receiver of the downloaded content is allowed in order to allow the receiver to determine whether the correct content has been downloaded. In this embodiment, the limited use is managed by the DRM/license module 220.

An OLTP engine 230 performs on-line transaction processing (OLTP). The OLTP engine 230 tracks transactions occurring in the platform. For example, when one user downloads a song from another user's library through the DMCHP network, transactions are recorded by the OLTP engine in order to:
- charge the receiving user for the downloaded content;
- credit the content rights holders as negotiated;
- where a transaction charge for the DMCHP service is charged, processing the transaction charge; and/or
- credit the remainder of the charge made to the receiving user to the providing user.

Additionally, OLTP engine 230 desirably performs periodic reconciliation and reporting of user and rights owner accounts.

An account management module 240 preferably includes account management details for users and rights owners including features such as billing information, address, and email.

A selling side user interface (UI) module 250 provides a user interface which allows the user to become a provider by registering content on the DMCHP 200 and setting prices, reviewing purchase history, and reconciling accounts, for example. The purchasing side UI module 260 provides a user interface which allows a user to receive data on the DMCHP network. Purchasing side UI module 260 preferably allows users to search the libraries of providing users, select and purchase content for download, and to view purchase history and account reconciliation reporting, for example.

Users 270 connect to DMCHP 200 to determine where and how content is available, for example. This connection is desirably made through network 215. In one embodiment, network 215 is the Internet.

For example, user 270(a) contacts purchasing side UI module 260 to determine whether a certain item of digital content is available on DMCHP network 200. This information is in the metadata repository 210. Through purchasing side UI module 260, user 270(a) identifies providing user 270(b) who can provide the digital content. User 270(a) contacts user 270(b) to download the data.

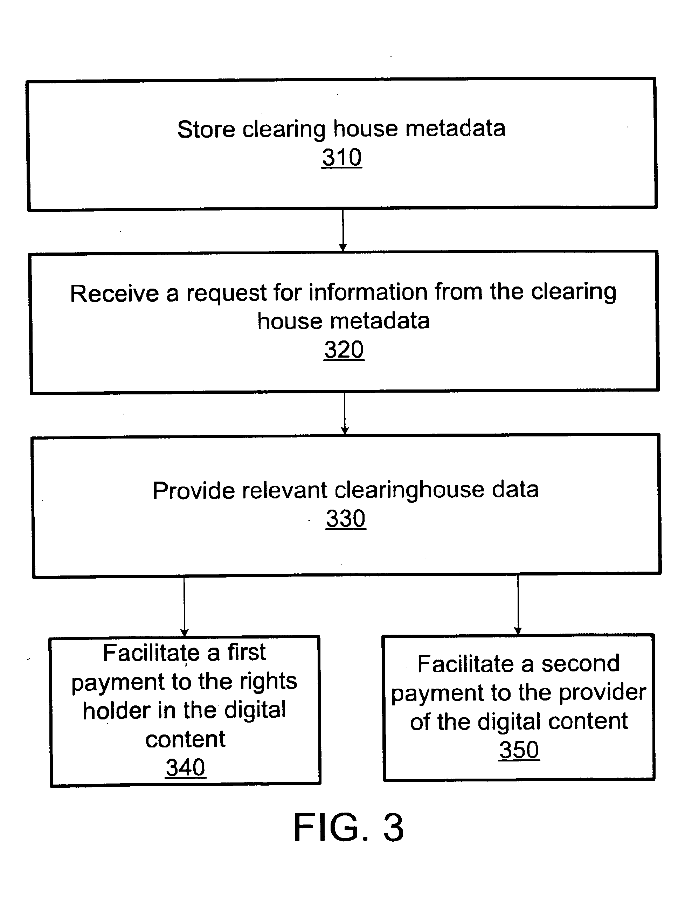

The invention may be implemented, as shown in Figure 3, by storing clearing house metadata, step 310. A request for information from said clearing house metadata (for example, the availability of a given song on the DMCHP network) may be made, see step 320. In response, step 330, relevant clearing house metadata is provided. When the recipient has examined the clearing house metadata and requested a download from a provider, a first payment to the rights owner is facilitated, step 340, and a second payment to the provider of the digital content is facilitated, step 350. This facilitation of payment may be direct, where the DMCHP network can directly debit or credit an account. It may also be through an intermediary. In this way, P2P file sharing is accomplished, the rights holder is compensated, and the provider of the download facility is given an incentive to share within the DMCHP network.

The DMCHP network may act according to a decentralized model of P2P file sharing or according to a centralized model. In one embodiment, aspects of the P2P file sharing are centralized. For example, verification or digital rights management facilities may be centralized. In other embodiments, some portions of the DMCHP may be decentralized (for example, portions of the metadata repository identifying where content is located) while others are not (for example, payment functionality may be available through a centralized DMCHP facility.

In other embodiments, the P2P file sharing is decentralized. The DMCHP facilities are provided on a distributed system of user computers, where each user computer may function with some, all or none of the described DMCHP functionality. This may occur, for example, with clearinghouse metadata information about pricing to be paid to content owners, account information etc, encoded in the digital media item, which is then shared according to the decentralized model. Whenever the content is downloaded, a transaction event is initiated charging the downloading devices account for amounts included in the license, as well as charging the distributing computers account and crediting the content owner's account. The metadata also may be stored in other ways on user computer. Additionally, other elements of the DMCHP such as the OLTP engine and purchasing side UI may be provided in a distributed manner in user computers. In these and other decentralized embodiments, the DMCHP network could provide completely decentralized P2P file sharing.

### Conclusion

As mentioned above, while exemplary embodiments of the present invention have been described in connection with various computing devices and network architectures, the underlying concepts may be applied to any computing device or system in which it is desirable to implement a digital media clearing house platform network. Thus, the methods and systems of the present invention may be applied to a variety of applications and devices. While exemplary programming languages, names and examples are chosen herein as representative of various choices, these languages, names and examples are not intended to be limiting. One of ordinary skill in the art will appreciate that there are numerous ways of providing object code that achieves the same, similar or equivalent systems and methods achieved by the invention.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the signal processing services of the present invention, e.g., through the use of a data processing API or the like, are preferably implemented in a high level procedural or object oriented programming language to communicate with a computer. However, the program(s) can be implemented in assembly or machine language, if desired. In any case, the language may be a compiled or interpreted language, and combined with hardware implementations.

The methods and apparatus of the present invention may also be practiced via communications embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, or a receiving machine having the signal processing capabilities as described in exemplary embodiments above becomes an apparatus for practicing the invention. When implemented on a general-purpose processor, the program code combines with the processor to provide a unique apparatus that operates to invoke the functionality of the present invention. Additionally, any storage techniques used in connection with the present invention may invariably be a combination of hardware and software.

While the present invention has been described in connection with the preferred embodiments of the various figures, it is to be understood that other similar embodiments may be used or modifications and additions may be made to the described embodiment for performing the same function of the present invention without deviating therefrom. Furthermore, it should be emphasized that a variety of computer platforms, including handheld device operating systems and other application specific operating systems are contemplated, especially as the number of wireless networked devices continues to proliferate. Therefore, the present invention should not be limited to any single embodiment, but rather should be construed in breadth and scope in accordance with the appended claims.

## Claims

1. A method for digital content sharing between a first computer and a second computer, comprising the steps of:
storing clearing house metadata comprising digital content metadata identifying a digital content item located in said first computer, associated identity metadata identifying said first computer, and associated rights owner metadata identifying a rights owner for said digital content item;
accepting a request for said clearing house metadata from said second computer;
providing at least a portion of said clearing house metadata in response to said request;
facilitating a first payment to a first account associated with said rights owner; and
facilitating a second payment to a second account associated with said first computer.

2. The method of claim 1, further comprising:
facilitating a third payment from a third account associated with said second computer.

3. The method of claim 1, where said third payment is substantially equal to the sum of said first payment and said second payment.

4. The method of claim 1, where said digital content metadata further comprises at least some metadata selected from among the following group: author metadata identifying one or more authors of said digital content item; description metadata describing said digital content item; performer information identifying one or more authors of said digital content item; format information identifying the format of the digital content item on said first computer; sampling rate information identifying the sampling rate of the digital content item on said first computer; connection information identifying the speed of the connection of said first computer; pricing metadata identifying a price for downloading said digital content item from said first computer; and associated rights owner charge identifying said first payment.

5. The method of claim 1, where said clearing house metadata further comprises user account metadata comprising metadata regarding said second account.

6. The method of claim 1, where said clearing house metadata further comprises user account metadata comprising metadata regarding an account associated with said request.

7. The method of claim 1, further comprising:
verifying said digital content item.

8. The method of claim 7, where said method for verifying said digital content item comprises verifying a signature of said digital content item.

9. The method of claim 7, where said method for verifying said digital content item comprises verifying that said digital content item is substantially similar to a legitimated digital content item.

10. The method of claim 7, where said method for verifying said digital content item comprises allowing a prespecified number of uses of at least a portion of said digital content item before said first and second payments are facilitated.

11. The method of claim 1 performed by a facilitator, further comprising:
facilitating a third payment to a third account associated with said facilitator.

12. The method of claim 11, further comprising:
facilitating a fourth payment from a fourth account associated with said second computer;
and where the amount of said fourth payment is substantially equal to the sum of said first payment, said second payment and said third payment.

13. The method of claim 1, where said peer-to-peer digital content sharing is performed according to a centralized model of peer-to-peer file sharing.

14. The method of claim 1, where said peer-to-peer digital content sharing is performed according to a decentralized model of peer-to-peer file sharing.

15. At least one of an operating system, a computer readable medium having stored thereon a plurality of computer-executable instructions, a co-processing device, a computing device, and a modulated data signal carrying computer executable instructions for performing the method of claim 1.

16. A system for digital content sharing between a first computer and a second computer comprising:
a metadata repository storing clearing house metadata comprising digital content metadata identifying a digital content item located in said first computer, associated identity metadata identifying said first computer, and associated rights owner metadata identifying a rights owner for said digital content item;
a purchasing-side user interface for providing at least a portion of said clearing house metadata in response to a request for said clearing house metadata; and
an on-line transaction processing engine for facilitating a first payment to a first account associated with said rights owner and facilitating a second payment to a second account associated with said first computer.

17. The system of claim 16, where said digital content metadata further comprises metadata selected from among the following group: author metadata identifying one or more authors of said digital content item; description metadata describing said digital content item; performer information identifying one or more authors of said digital content item; pricing metadata identifying a price for downloading said digital content item from said first computer; and associated rights owner charge identifying said first payment.

18. The system of claim 16, where said clearing house metadata further comprises user account metadata comprising metadata regarding said second account.

19. The system of claim 16, where said clearing house metadata further comprises user account metadata comprising metadata regarding an account associated with said request.

20. The system of claim 16, further comprising:
a verifier for verifying the identity of said digital content item.

21. The system of claim 20, where said verifier comprises a digital rights management module.

22. The system of claim 21, where said digital rights management module verifies a signature of said digital content item.

23. The system of claim 21, where said digital rights management module allows a prespecified number of uses of at least a portion of said digital content item for a user for verification by said user.

24. The method of claim 20, where said verifier determines whether said digital content item is substantially similar to a legitimated digital content item.

25. The system of claim 20, where said first payment and said second payment are only made if said verifier verifies the identity of said digital content item.

26. The system of claim 16, where said on line transaction processing engine further facilitates a third payment to a third account associated with said system.

27. The system of claim 16, where said system operates according to a centralized model of peer-to-peer file sharing.

28. The system of claim 16, where said system operates according to a decentralized model of peer-to-peer file sharing.

29. The system of claim 16, further comprising:
an account management module for managing user accounts.

30. The system of claim 16, further comprising:
a selling-side user interface for providing clearing house metadate entry functionality.
